(19) Europäisches Patentamt
European Patent Office
Office européen des brevets

(11) **EP 4 261 400 A1**

(12) **EUROPEAN PATENT APPLICATION**

(43) Date of publication:
**18.10.2023 Bulletin 2023/42**

(21) Application number: **23168330.1**

(22) Date of filing: **17.04.2023**

(51) International Patent Classification (IPC):
**F02C 7/32** (2006.01)

(52) Cooperative Patent Classification (CPC):
**F02C 7/32;** F02C 7/36; F05D 2260/40311

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.04.2022 US 202217721642**

(71) Applicant: **Raytheon Technologies Corporation
Farmington, CT 06032 (US)**

(72) Inventors:
• **HANRAHAN, Paul R.
Sedona, 86351 (US)**
• **KUPRATIS, Daniel B.
Wallingford, 06492 (US)**
• **STACHOWIAK, David Allen
Manchester, 06040 (US)**

(74) Representative: **Dehns
St. Bride's House
10 Salisbury Square
London EC4Y 8JD (GB)**

(54) **GEARBOX ARRANGEMENT FOR CLOSE TO CONSTANT SPEED ACCESSORIES**

(57)    A gas turbine engine includes a high speed turbine and a high speed compressor connected to define a high speed spool and a low speed turbine and a low speed compressor connected to define a low speed spool. A high speed tower shaft (106) is driven by the high speed spool and a low speed tower shaft (110) is driven by the low speed spool. The low speed tower shaft (110) drives a low speed input gear in an accessory drive differential. The high speed tower shaft (106) drives a high speed input gear (204) in the accessory drive differential. The high speed input gear (204) or the low speed input gear (206) increases an output speed of an output gear, and the other decreases an output speed of the output gear. The output gear drives at least one accessory (146,147).

FIG.2B

## Description

## BACKGROUND OF THE INVENTION

This invention relates to an accessory gearbox arrangement for gas turbine engine accessories which provides a speed that is approximately constant.

Gas turbine engines are known, and typically include a plurality of accessories to support the operation of the engine. Examples would include fuel pumps, hydraulic pumps, oil pumps and generators.

The gas turbine engine typically includes a high pressure turbine driving a high pressure compressor and a low pressure turbine driving a low pressure compressor. The low pressure turbine will typically drive a fan rotor, sometimes through a gear reduction.

The fan rotor, low pressure compressor and low pressure turbine are known as a low speed spool. The high pressure compressor and high pressure turbine are known as a high speed spool.

The fan provides air into a bypass duct as propulsion air, and into the low pressure compressor. The air is compressed in the low and high pressure compressors, and then delivered into a combustor where it is mixed with fuel and ignited. Products of this combustion pass over the high pressure turbine and then the low pressure turbine, driving them to rotate. The turbines in turn drive their respective spools.

Rotational power for the accessories is typically provided by tower shafts which are driven to rotate with the spools. However, it is known that over the course of operation of a gas turbine engine the speed of the low speed spool and high speed spool varies by a significant amount.

## SUMMARY OF THE INVENTION

According to an aspect of the present invention, a gas turbine engine includes a high speed turbine and a high speed compressor connected by a high speed shaft to define a high speed spool. A low speed turbine and a low speed compressor are connected by a low speed shaft to define a low speed spool. A high speed tower shaft is driven by the high speed spool and a low speed tower shaft is driven by the low speed spool. The low speed tower shaft drives a low speed input gear in an accessory drive differential. The high speed tower shaft drives a high speed input gear in the accessory drive differential. One of the high speed input gear and the low speed input gear increases an output speed of an output gear, and the other decreases an output speed of the output gear. The output gear drives at least one accessory for the gas turbine engine.

Optionally, and in accordance with any of the above, the accessory drive differential is an epicyclic gear reduction. The low speed input gear drives a ring gear in the epicyclic gear reduction in a first direction. The high speed input gear drives a carrier in the epicyclic gear reduction in the first direction. The output gear is a sun gear driven to rotate in the first direction.

Optionally, and in accordance with any of the above, the sun gear drives at least one of a hydraulic pump, an alternator and a generator.

Optionally, and in accordance with any of the above, the low speed tower shaft also drives at least one additional accessory through low drive gears.

Optionally, and in accordance with any of the above, the high speed spool also drives at least one additional accessory through high drive gears.

Optionally, and in accordance with any of the above, the additional accessories and the accessories driven by the accessory drive gear reduction are housed in a common housing.

Optionally, and in accordance with any of the above, the common location is on an outer surface of a core engine housing the high speed spool and low speed spool.

Optionally, and in accordance with any of the above, the common location is in a strut positioned between the high pressure turbine and the low pressure turbine.

Optionally, and in accordance with any of the above, the common location is within a fan case surrounding a fan also driven by the low speed turbine.

Optionally, and in accordance with any of the above, a speed range of a speed of the sun gear at an idle condition for the gas turbine engine compared to a speed of the sun gear at a takeoff condition is within 10% such that a takeoff speed of the sun gear is less than or equal to 110% of a speed of the sun gear at an idle condition.

Optionally, and in accordance with any of the above, a star speed ratio defined as a ratio of the pitch diameter of the ring gear compared to the pitch diameter of the sun gear is between 1.3 and 3.2.

Optionally, and in accordance with any of the above, the star speed ratio is between 1.8 and 2.5.

Optionally, and in accordance with any of the above, the low pressure turbine drives a fan rotor through a drive gear reduction.

Optionally, and in accordance with any of the above, a speed range of a speed of the sun gear at an idle condition for the gas turbine engine compared to a speed of the sun gear at a takeoff condition is within 10% such that a takeoff speed of the sun gear is less than or equal to 110% of a speed of the sun gear at an idle condition.

Optionally, and in accordance with any of the above, a speed range of a speed of the output gear at an idle condition for the gas turbine engine compared to a speed of the output gear at a takeoff condition is within 10% such that a takeoff speed of the output gear is less than or equal to 110% of a speed of the output gear at an idle condition.

Optionally, and in accordance with any of the above, a star speed ratio defined as a ratio of the pitch diameter of the low speed input gear compared to the pitch diameter of the output gear is between 1.3 and 3.2.

Optionally, and in accordance with any of the above, the accessory drive differential is an epicyclic gear reduction. The low speed input gear drives a carrier in the epicyclic gear reduction in a first direction. The high speed input gear drives a ring gear in the epicyclic gear reduction in a second direction opposed to the first direction. The output gear is a sun gear driven to rotate in the second direction.

Optionally, and in accordance with any of the above, the accessory drive differential is an epicyclic gear reduction. The low speed input gear drives a sun gear in the epicyclic gear reduction in a first direction. The high speed input gear drives a carrier in the epicyclic gear reduction in the first direction. The output gear is a ring gear driven to rotate in the first direction.

Optionally, and in accordance with any of the above, the sun gear drives at least one of a hydraulic pump, an alternator, and a generator.

Optionally, and in accordance with any of the above, the accessory drive differential includes the high speed input gear driving a ring gear that in turn drives a differential gear, the low speed input gear engaging the differential gear, and the differential gear driving the output gear.

The present invention may include any one or more of the individual features disclosed above and/or below alone or in any combination thereof.

These and other features of the present invention can be best understood from the following specification and drawings, the following of which is a brief description.

## BRIEF DESCRIPTION OF THE DRAWINGS

Figure 1 schematically shows a gas turbine engine.
Figure 2A schematically shows an accessory drive for a gas turbine engine such as the engine of Figure 1.
Figure 2B shows further details.
Figure 3 shows a detail of an epicyclic gear for driving accessories.
Figure 4A shows relative speeds within the epicyclic gear reduction of Figure 3.
Figure 4B shows a graph of the relative speeds.
Figure 5 shows another embodiment.
Figure 6 shows another embodiment.
Figure 7 shows another embodiment.
Figure 8 shows yet another embodiment.

## DETAILED DESCRIPTION

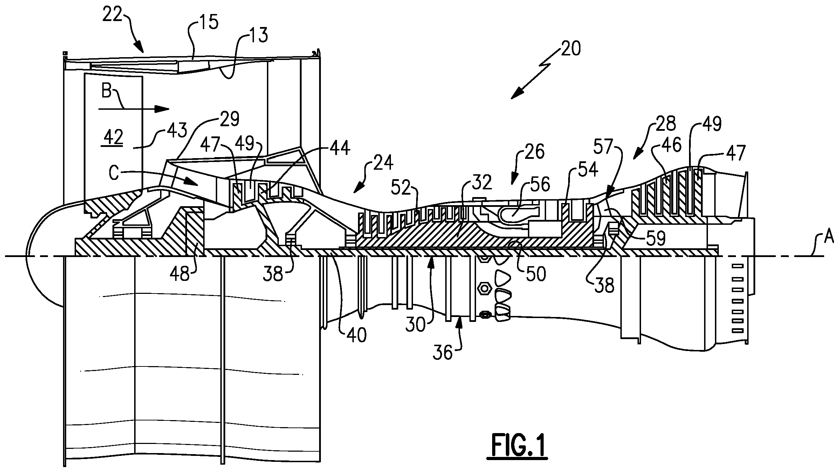

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 may include a single-stage fan 42 having a plurality of fan blades 43. The fan blades 43 may have a fixed stagger angle or may have a variable pitch to direct incoming airflow from an engine inlet. The fan 42 drives air along a bypass flow path B in a bypass duct 13 defined within a housing 15 such as a fan case or nacelle, and also drives air along a core flow path C for compression and communication into the combustor section 26 then expansion through the turbine section 28. A splitter 29 aft of the fan 42 divides the air between the bypass flow path B and the core flow path C. The housing 15 may surround the fan 42 to establish an outer diameter of the bypass duct 13. The splitter 29 may establish an inner diameter of the bypass duct 13. Although depicted as a two-spool turbofan gas turbine engine in the disclosed nonlimiting embodiment, it should be understood that the concepts described herein are not limited to use with two-spool turbofans as the teachings may be applied to other types of turbine engines including three-spool architectures. The engine 20 may incorporate a variable area nozzle for varying an exit area of the bypass flow path B and/or a thrust reverser for generating reverse thrust.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in the exemplary gas turbine engine 20 is illustrated as a geared architecture 48 to drive the fan 42 at a lower speed than the low speed spool 30. The inner shaft 40 may interconnect the low pressure compressor 44 and low pressure turbine 46 such that the low pressure compressor 44 and low pressure turbine 46 are rotatable at a common speed and in a common direction. In other embodiments, the low pressure turbine 46 drives both the fan 42 and low pressure compressor 44 through the geared architecture 48 such that the fan 42 and low pressure compressor 44 are rotatable at a common speed. Although this application discloses geared architecture 48, its teaching may benefit direct drive engines having no geared architecture. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core flow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The low pressure compressor 44, high pressure compressor 52, high pressure turbine 54 and low pressure turbine 46 each include one or more stages having a row of rotatable airfoils. Each stage may include a row of vanes adjacent the rotatable airfoils. The rotatable airfoils are schematically indicated at 47, and the vanes are schematically indicated at 49.

The engine 20 may be a high-bypass geared aircraft engine. The bypass ratio can be greater than or equal to 10.0 and less than or equal to about 18.0, or more narrowly can be less than or equal to 16.0. The geared architecture 48 may be an epicyclic gear train, such as a planetary gear system or a star gear system. The epicyclic gear train may include a sun gear, a ring gear, a plurality of intermediate gears meshing with the sun gear and ring gear, and a carrier that supports the intermediate gears. The sun gear may provide an input to the gear train. The ring gear (e.g., star gear system) or carrier (e.g., planetary gear system) may provide an output of the gear train to drive the fan 42. A gear reduction ratio may be greater than or equal to 2.3, or more narrowly greater than or equal to 3.0, and in some embodiments the gear reduction ratio is greater than or equal to 3.4. The gear reduction ratio may be less than or equal to 4.0. The fan diameter is significantly larger than that of the low pressure compressor 44. The low pressure turbine 46 can have a pressure ratio that is greater than or equal to 8.0 and in some embodiments is greater than or equal to 10.0. The low pressure turbine pressure ratio can be less than or equal to 13.0, or more narrowly less than or equal to 12.0. Low pressure turbine 46 pressure ratio is pressure measured prior to an inlet of low pressure turbine 46 as related to the pressure at the outlet of the low pressure turbine 46 prior to an exhaust nozzle. It should be understood, however, that the above parameters are only exemplary of one embodiment of a geared architecture engine and that the present invention is applicable to other gas turbine engines including direct drive turbofans. All of these parameters are measured at the cruise condition described below.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. The engine parameters described above, and those in the next paragraph are measured at this condition unless otherwise specified.

"Fan pressure ratio" is the pressure ratio across the fan blade 43 alone, without a Fan Exit Guide Vane ("FEGV") system. A distance is established in a radial direction between the inner and outer diameters of the bypass duct 13 at an axial position corresponding to a leading edge of the splitter 29 relative to the engine central longitudinal axis A. The fan pressure ratio is a spanwise average of the pressure ratios measured across the fan blade 43 alone over radial positions corresponding to the distance. The fan pressure ratio can be less than or equal to 1.45, or more narrowly greater than or equal to 1.25, such as between 1.30 and 1.40. "Corrected fan tip speed" is the actual fan tip speed in ft/sec divided by an industry standard temperature correction of $[(\text{Tram } °R) / (518.7 \ °R)]^{0.5}$. The corrected fan tip speed can be less than or equal to 1150.0 ft / second (350.5 meters/second), and can be greater than or equal to 1000.0 ft / second (304.8 meters/second).

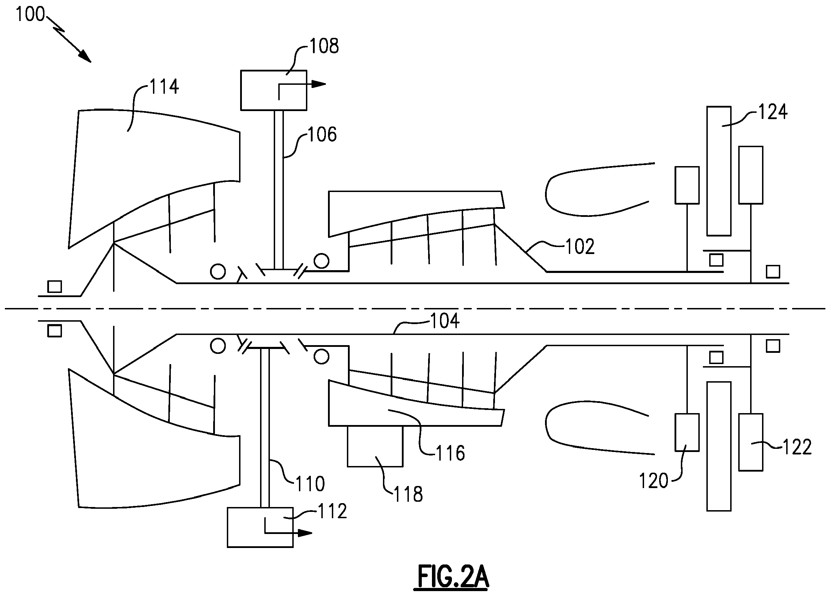

Figure 2A shows an engine 100 which may operate similar to the engine shown in Figure 1. A high speed spool 102 drives a high speed tower shaft 106. Tower shaft 106 drives a group of accessories 108, as will be explained below. The low speed spool 104 drives a tower shaft 110 which in turn drives its accessories 112. A gearbox may be provided within a fan case 114, or as shown at 118 on an outer surface of a core engine housing 116. A further optional location may be a strut 124 such as a mid-turbine frame positioned between a high speed turbine 120 and a low pressure turbine 122. However, many other locations may be utilized for the gearbox.

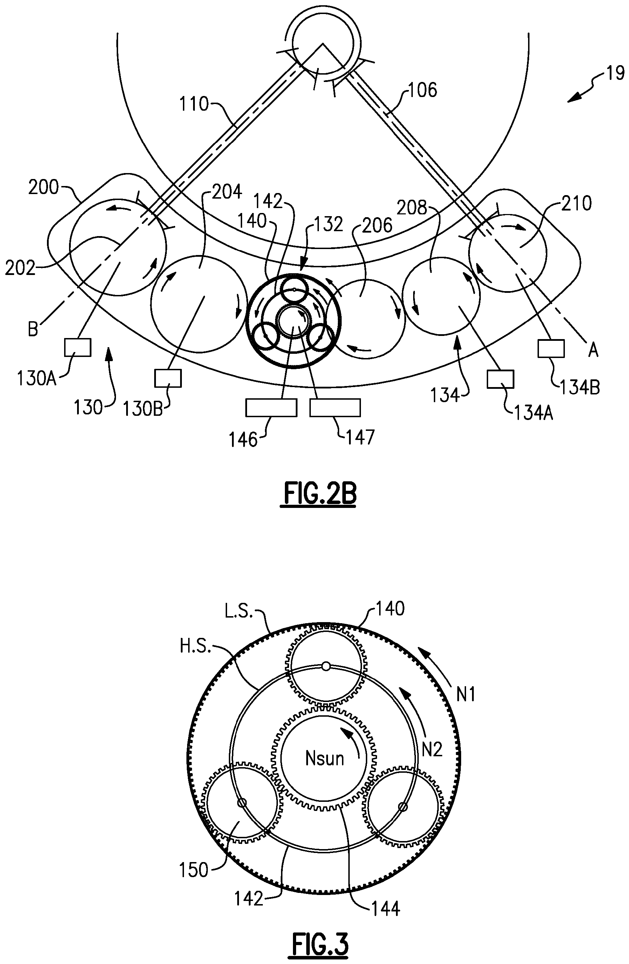

Figure 2B shows an accessory drive arrangement 19, where the tower shaft 106 associated with the high speed spool drives accessories 134, while the low speed tower shaft 110 drives accessories 130. The combination of the two tower shafts 106 and 110 also drives an epicyclic gear reduction 132. The tower shaft 106 drives accessories 134A and 134B. In embodiments these accessories could be an oil pump or a main fuel pump. As can be seen, there is a housing 200 that will house the accessories 130, accessories 134 and the accessories 146 and 147 driven by an epicyclic gear train, as will be disclosed below.

The tower shaft 110 is shown driving accessories 130A and 130B. Among the potential accessories would be an augmented fuel pump. As will be explained below, the low speed tower shaft will have its speed vary considerably across the operation of the gas turbine engine. At low power operation of the engine, its speed may be as an example 60% of what it might be at takeoff operation. However, an augmented fuel pump has a reduced power draw at low power operations such as idle and cruise, and thus the very low speed will not prove problematic.

The epicycle gear reduction 132 is shown having a ring gear 140 driven by the low speed tower shaft 110 through gears 202 and 204. The epicyclic gear 132 also has a carrier 142 driven with the high speed tower shaft 106, through gears 210, 208 and 206. A sun gear 144 is driven by the combination of the ring gear 140 and carrier 142 to in turn drive accessories 146 and 147. Accessories 146 and 147 may include a hydraulic pump or permanent magnet alternator or a permanent magnet generator. These accessories benefit from having near constant speed.

While the tower shafts are shown driving the carrier 142 and ring gear 140 through intermediate gears, the tower shafts could drive their respective gears directly with the intermediate gears being driven in some other manner to drive their respective accessories.

As shown in Figures 3 and 2B, the tower shaft 110 and gears 202 and 204 drive the ring gear 140 in a first direction at a speed N1. The carrier 142 is driven in the same direction at a speed N2 by tower shaft 106 through gears 210, 208 and 206.

As carrier 142 is driven to rotate, it moves intermediate gears 150 which engage and drive a sun gear 144. The sun gear 144 will in turn be rotated in the same direction at a speed $N_{sun}$. By having this arrangement, the ring gear effectively limits the speed provided to the sun gear by the carrier 142.

The speed $N_{sun}$ is defined by the following formula:

$$N_{sun} = N2*(SR+1) - N1*SR$$

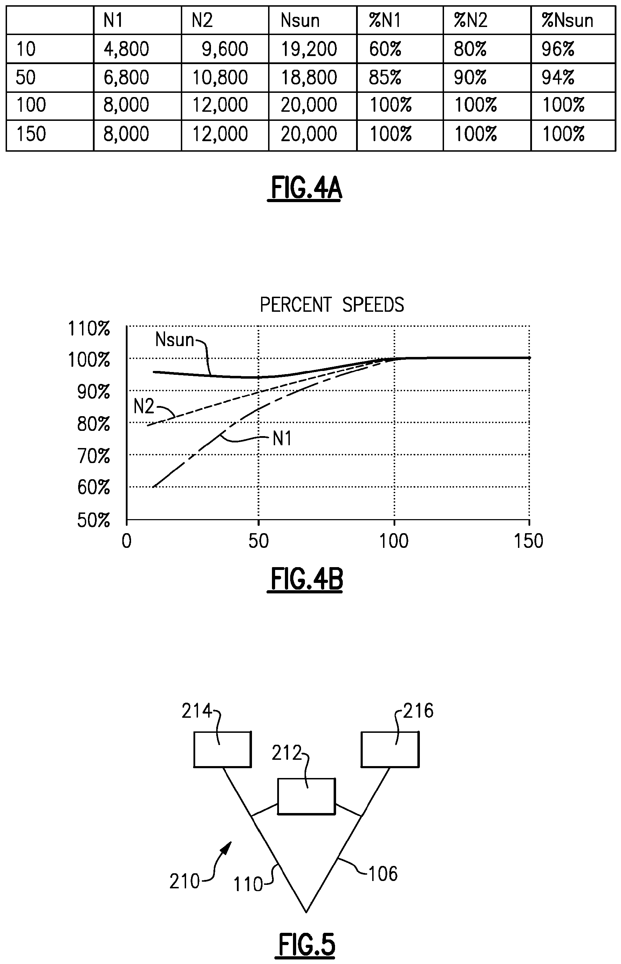

The SR component is defined as the pitch diameter of the ring gear divided by the pitch diameter of the sun gear. In one embodiment it is 2.0, and that embodiment provides the speed numbers that are disclosed below with regard to Figures 4A and 4B.

Thus, as can be seen, the low speed drive provided to the ring gear effectively reduces the speed of the sun gear.

As shown in Figure 4A, there is wide variation of the N1 speed across the power settings of the engine, and on the order of a 40% increase. While the N2 speed varies by a lesser percentage, it still varies significantly.

On the other hand, the $N_{sun}$ speed can be seen to be within a 10% band. The (SR+1) factor in the formula above leverages the speed of the carrier 142 by (SR+1) relative to the (SR) component of the speed of the ring gear, and this leveraging offsets the variation of N1 speed versus the variation of N2 speed. Thus, with this arrangement, speed provided to the accessories driven by the sun gear 144 is closer to constant.

Figure 4B shows the variation of the speeds N1, N2 and $N_{sun}$ across operation percentages of the engine. Again, the speed of the sun gear is within a 10% band. That is, at it's the highest speed divided by the lowest will be less than 110%. The beginning speeds in Figure 4B are shown at idle power. The 100 number of Figure 4B is the typical full power, while the speed 150 could be called a maximum augmented power. As can be appreciated, both the ring gear 140 and the carrier 142 are driven across all speeds of the engine. Figure 5 shows another embodiment 210 wherein there is a first housing 214 housing the accessories driven directly by the low speed tower shaft 110. There is a separate housing 216 housing the accessories driven directly by the tower shaft 106. Yet another housing 212 houses the accessories driven by the combination of the two tower shafts through the epicyclic gear reduction. The locations of the housings 212, 214 and 216 can be any number of different locations on the engine.

While three separate housings are disclosed in a particular geometric relationship, any of the three housings could be in any geometric relationship relative to the other. Moreover, there could also be an embodiment where there are only two housings with one of the two housings enclosing two of the three components specifically mentioned in the Figure 5 embodiment, and a second housing enclosing the third.

Providing near constant speed to the hydraulic pump 146 is beneficial. Hydraulic power to drive aircraft and engine control features such as wing flaps and exhaust area is needed regardless of engine power level, so it is typically designed for full pump power at idle speed. When the engine then operates at higher power settings, it drives the pump much faster than is necessary which overproduces unneeded power. Providing near constant speed to the alternators and/or generators is also beneficial. As they drop speed, they produce less voltage and thus require more amperage to meet the power demand. Having a smaller speed range would allow these components to be sized smaller with reduced amperage.

In embodiments, the speed ratio SR can be between 1.3 and 3.2. In further embodiments, a speed ratio can be between 1.8 and 2.5. Returning to Figure 4A, one can see that there is a lowest speed of the sun gear effectively at 50% operation. By adjusting the speed ratio SR one can tune where this drop will be, dependent on a desired time when the lower speed will occur, and the relative difference in speeds of the high speed spool 102 and the low speed spool 104. The difference in speeds for the high speed spool 102 and low speed spool 104 can be different for high-bypass geared aircraft engines with different bypass ratios.

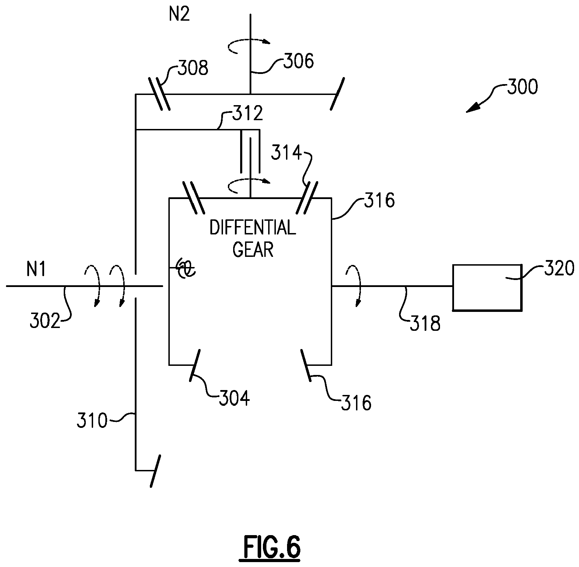

While the above embodiment utilizes an epicyclic gear reduction, other differentials can provide the functionality of this disclosure. As an example, Figure 6 shows an automobile style differential 300. A low speed spool input 302 drives a low speed input gear 304. A high speed input shaft 306 drives a high speed input gear 308. High speed input gear 308 drives a ring gear 310 having an extension 312 which holds an axis of a differential (or "spider") gear 314 to in turn drive an output gear 316 that drives a shaft 318 to drive an accessory 320. Of course, a worker of skill in this art would recognize that many other types of differentials can be utilized to provide the basic concept of this disclosure.

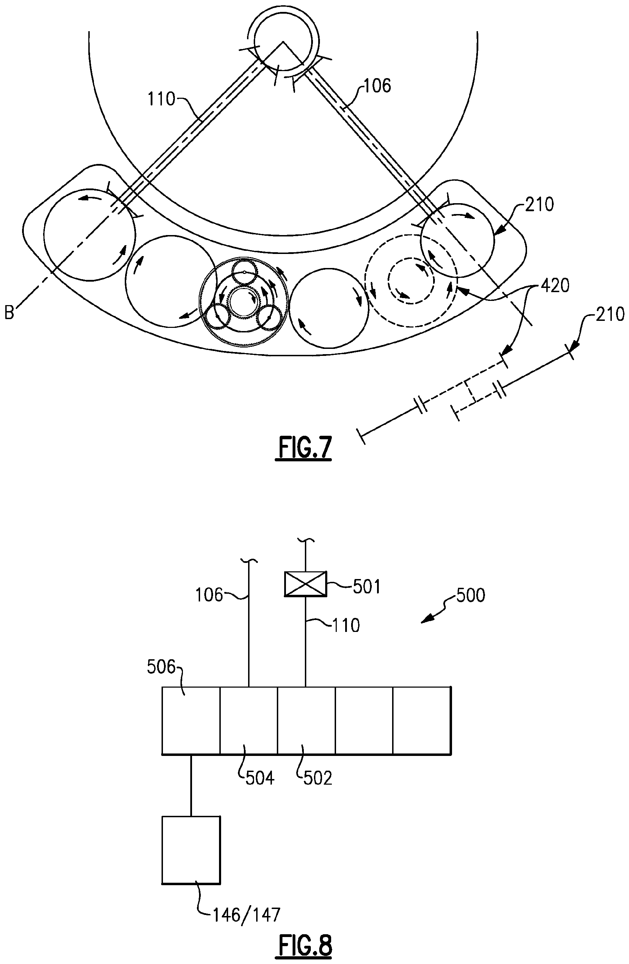

Figure 7 shows another embodiment. Essentially, this embodiment is similar to the embodiment of Figure 2B, however, now the high speed tower shaft 106 and intermediary gears 210/208/206 drive the ring gear 140 and the low speed tower shaft 110 and intermediary gears 202/204 drive the carrier 142. Preferably, a speed change mechanism 420 within or among gears 210/208/206 increases the speed of the high speed tower shaft input - for instance by a factor of two - such that it is significantly faster than the input from the low speed tower shaft and the resulting sun gear rotation is near constant speed, although in a negative direction. As can be seen from comparing the arrows in Figure 2B and 7, the direction of rotation of the sun gear will now be reversed from that of the prior embodiment.

Figure 8 schematically shows an embodiment 500 which is also somewhat similar to Figure 2B. Now, the low speed tower shaft 110 drives the sun gear 502 through a speed increase mechanism 501 that generally increases the speed by a factor of two. The sun gear in turn engages and drives intermediate gears which drive a carrier 504, which is also driven by the high speed tower shaft 106. This in turn results in the ring gear 506 being driven to rotate and rotate accessories 146/147.

Again, the approximate equal output speed benefits will be achieved by both the Figure 7 and 8 embodiments. In addition, the various packaging, change of rotational direction statements, and all other statements made with regard to the earlier embodiments would apply to these additional embodiments.

The example gear trains shown in Figures 2A/2B and 6-8 depict a solution for co-rotating spools, but this disclosure should not be limited to that specific implementation. One skilled in the art would recognize that the gear train could be adapted to accomplish the benefit of this disclosure with either spool turning either direction.

A gas turbine engine under this disclosure could be said to include a high speed turbine and a high speed compressor connected by a high speed shaft to define a high speed spool. A low speed turbine and a low speed compressor are connected by a low speed shaft to define a low speed spool. There is a high speed tower shaft driven by the high speed spool and a low speed tower shaft driven by the low speed spool. The low speed tower shaft drives a low speed input gear in an accessory drive differential. The high speed tower shaft drives a high speed input gear in the accessory drive differential. One of the high speed input gear and low speed input gear increases an output speed of an output gear, and the other decreases an output speed of the output gear. The output gear drives at least one accessory for the gas turbine engine.

Although embodiments have been disclosed, a worker of ordinary skill in this art would recognize that modifications would come within the scope of this disclosure. For that reason, the following claims should be studied to determine the true scope and content of this disclosure.

**Claims**

1. A gas turbine engine (20) comprising:

   a high speed turbine (120) and a high speed compressor (52) connected by a high speed shaft to define a high speed spool (102);
   a low speed turbine (122) and a low speed compressor (44) connected by a low speed shaft to define a low speed spool (104); and
   a high speed tower shaft (106) driven by said high speed spool (102) and a low speed tower shaft (110) driven by said low speed spool (104), the low speed tower shaft (110) driving a low speed input gear (206, 304) in an accessory drive differential, the high speed tower shaft (106) driving a high speed input gear (204, 308) in said accessory drive differential, one of said high speed input gear (204, 308) and said low speed input gear (206, 304) increases an output speed of an output gear (144; 316), and the other decreases an output speed of said output gear (144 ;316), said output gear (144; 316) driving at least one accessory (146, 147, 320) for the gas turbine engine (20).

2. The gas turbine engine (20) as set forth in claim 1, wherein said accessory drive differential is an epicyclic gear reduction (132), and said low speed input gear (204, 304) drives a ring gear (140, 310) in said epicyclic gear reduction (132) in a first direction, said high speed input gear (204, 308) drives a carrier (142, 504) in said epicyclic gear reduction (132) in said first direction, and said output gear (144; 316) is a sun gear (144) driven to rotate in said first direction.

3. The gas turbine engine (20) as set forth in claim 2, wherein a speed range of a speed of said sun gear (144) at an idle condition for the gas turbine engine (20) compared to a speed of said sun gear (144) at a takeoff condition is within 10% such that a takeoff speed of said sun gear (144) is less than or equal to 110% of a speed of said sun gear (144) at an idle condition.

4. The gas turbine engine (20) as set forth in claim 3, wherein a star speed ratio defined as a ratio of the pitch diameter of the ring gear (140, 310) compared to the pitch diameter of the sun gear (144) is between 1.3 and 3.2 and optionally between 1.8 and 2.5.

5. The gas turbine engine (20) as set forth in claim 1, wherein said accessory drive differential is an epicyclic gear reduction (132), and said low speed input gear (204, 304) drives a carrier (142, 504) in said epicyclic gear reduction (132) in a first direction, said high speed input gear (206, 308) drives a ring gear (140, 310) in said epicyclic gear reduction (132) in a second direction opposed to said first direction, and said output gear is a sun gear (144) driven to rotate in said second direction.

6. The gas turbine (20) as set forth in claim 1, wherein said accessory drive differential (132) is an epicyclic gear reduction (132), and said low speed input gear (204, 304) drives a sun gear (144) in said epicyclic gear reduction (132) in a first direction, said high speed input gear (206, 308) drives a carrier (142, 504) in said epicyclic gear reduction (132) in said first direction, and said output gear (316) is a ring gear (140, 310) driven to rotate in said first direction.

7. The gas turbine engine (20) as set forth in claim 1, wherein said accessory drive differential includes said high speed input gear (206, 308) that drives a ring gear (140, 310) that in turn drives a differential gear, said low speed input gear (204, 304) engages said differential gear, and said differential gear drives said output gear.

8. The gas turbine engine (20) as set forth in any of claims 1 or 5 to 7, wherein a speed range of a speed of said output gear (316) at an idle condition for the gas turbine engine (20) compared to a speed of said output gear (316) at a takeoff condition is within 10% such that a takeoff speed of said output gear (316) is less than or equal to 110% of a speed of said output gear (316) at an idle condition.

9. The gas turbine engine (20) as set forth in any of claims 1 or 5 to 8, wherein a star speed ratio defined as a ratio of the pitch diameter of the low speed input gear (204, 304) compared to the pitch diameter of the output gear (316) is between 1.3 and 3.2, optionally wherein said star speed ratio is between 1.8 and 2.5.

10. The gas turbine engine (20) as set forth in any preceding claim, wherein said sun or output gear (144, 316) drives at least one of a hydraulic pump (146, 147, 320), an alternator (146, 147, 320) and a generator (146, 147, 320).

11. The gas turbine engine (20) as set forth in any preceding claim, wherein said low speed tower shaft (110) also drives at least one additional accessory (130) through low drive gears (202, 204).

12. The gas turbine engine as set forth in any preceding claim, wherein said high speed spool (32, 102) also drives at least one additional accessory (134) through high drive gears (206, 208, 210).

13. The gas turbine engine (20) as set forth in claim 11 or 12, wherein said at least one additional accessory (130,134) and said accessories (130,134) driven by said accessory drive differential (132) are housed in a common housing (200).

14. The gas turbine engine (20) as set forth in claim 13, wherein said common housing is located:

> on an outer surface (118) of a core engine housing (116) around said high speed spool (102) and low speed spool (104);
> in a strut (124) positioned between said high speed turbine (120) and said low speed turbine (122); or
> within a fan case (114) surrounding a fan (42) also driven by said low speed turbine (122).

15. The gas turbine engine (20) as set forth in any preceding claim, wherein said low speed turbine (46, 122) drives a fan rotor (42) through a drive gear reduction.

FIG.1

**FIG.2A**

FIG.2B

FIG.3

|  | N1 | N2 | Nsun | %N1 | %N2 | %Nsun |
|---|---|---|---|---|---|---|
| 10 | 4,800 | 9,600 | 19,200 | 60% | 80% | 96% |
| 50 | 6,800 | 10,800 | 18,800 | 85% | 90% | 94% |
| 100 | 8,000 | 12,000 | 20,000 | 100% | 100% | 100% |
| 150 | 8,000 | 12,000 | 20,000 | 100% | 100% | 100% |

### FIG.4A

PERCENT SPEEDS

### FIG.4B

### FIG.5

N2

308

306

300

312

314

316

DIFFENTIAL
GEAR

N1

302

304

316

310

318

320

**FIG.6**

110    106

210

B    420

210

**FIG.7**

106    501    500

110

506

504    502

146/147

**FIG.8**

EP 4 261 400 A1

Europäisches Patentamt
European Patent Office
Office européen des brevets

# EUROPEAN SEARCH REPORT

Application Number

EP 23 16 8330

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 636 898 A1 (UNITED TECHNOLOGIES CORP [US]) 15 April 2020 (2020-04-15) * figures 2-3 * * paragraphs [0040] – [0058] * | 1-15 | INV. F02C7/32 |
| X | EP 3 693 578 A1 (UNITED TECHNOLOGIES CORP [US]) 12 August 2020 (2020-08-12) * figures 2,3 * * paragraphs [0042] – [0052] * | 1-15 | |
| X | EP 3 628 847 A1 (UNITED TECHNOLOGIES CORP [US]) 1 April 2020 (2020-04-01) * figures 2,3 * * paragraphs [0035] – [0040] * | 1-15 | |
| X A | US 2020/080495 A1 (LEQUE NICHOLAS D [US] ET AL) 12 March 2020 (2020-03-12) * paragraphs [0043] – [0047]; figure 2 * | 1 2-15 | |
| X | EP 3 708 793 A1 (UNITED TECHNOLOGIES CORP [US]) 16 September 2020 (2020-09-16) * paragraphs [0034] – [0045] * | 1-15 | TECHNICAL FIELDS SEARCHED (IPC) F02C |
| A | EP 3 690 214 A1 (UNITED TECHNOLOGIES CORP [US]) 5 August 2020 (2020-08-05) * paragraphs [0036] – [0040]; figures 2-3 * | 1-15 | |
| A | US 2021/404389 A1 (FINKE AARON M [US] ET AL) 30 December 2021 (2021-12-30) * figures 4,6 * * paragraphs [0026] – [0032] * | 1-15 | |
| A | EP 3 772 577 A1 (HAMILTON SUNDSTRAND CORP [US]) 10 February 2021 (2021-02-10) * paragraphs [0019] – [0024]; figures 4-6 * | 1-15 | |

The present search report has been drawn up for all claims

| Place of search | Date of completion of the search | Examiner |
|---|---|---|
| The Hague | 31 August 2023 | Fortugno, Eugenio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14

## ANNEX TO THE EUROPEAN SEARCH REPORT
## ON EUROPEAN PATENT APPLICATION NO.

EP 23 16 8330

This annex lists the patent family members relating to the patent documents cited in the above-mentioned European search report.
The members are as contained in the European Patent Office EDP file on
The European Patent Office is in no way liable for these particulars which are merely given for the purpose of information.

31-08-2023

| Patent document cited in search report | | Publication date | Patent family member(s) | | Publication date |
|---|---|---|---|---|---|
| EP 3636898 | A1 | 15-04-2020 | EP 3636898 | A1 | 15-04-2020 |
| | | | EP 4177449 | A1 | 10-05-2023 |
| | | | US 2020116085 | A1 | 16-04-2020 |
| EP 3693578 | A1 | 12-08-2020 | EP 3693578 | A1 | 12-08-2020 |
| | | | US 2020248632 | A1 | 06-08-2020 |
| EP 3628847 | A1 | 01-04-2020 | EP 3628847 | A1 | 01-04-2020 |
| | | | US 2020102892 | A1 | 02-04-2020 |
| US 2020080495 | A1 | 12-03-2020 | EP 3693581 | A1 | 12-08-2020 |
| | | | EP 4215737 | A1 | 26-07-2023 |
| | | | US 2020080495 | A1 | 12-03-2020 |
| EP 3708793 | A1 | 16-09-2020 | EP 3708793 | A1 | 16-09-2020 |
| | | | US 2020291817 | A1 | 17-09-2020 |
| | | | US 2021207496 | A1 | 08-07-2021 |
| EP 3690214 | A1 | 05-08-2020 | EP 3690214 | A1 | 05-08-2020 |
| | | | US 2020240331 | A1 | 30-07-2020 |
| | | | US 2022205394 | A1 | 30-06-2022 |
| US 2021404389 | A1 | 30-12-2021 | NONE | | |
| EP 3772577 | A1 | 10-02-2021 | EP 3772577 | A1 | 10-02-2021 |
| | | | US 2021040894 | A1 | 11-02-2021 |

EPO FORM P0459

For more details about this annex : see Official Journal of the European Patent Office, No. 12/82